Europäisches Patentamt

European Patent Office

Office européen des brevets

(11) Publication number: **0 196 235**
A2

## (12) EUROPEAN PATENT APPLICATION

(21) Application number: **86302287.7**

(22) Date of filing: **26.03.86**

(51) Int. Cl.⁴: **A 23 L 1/01**, A 23 L 1/317

(30) Priority: **26.03.85 GB 8507812**

(43) Date of publication of application: **01.10.86**
**Bulletin 86/40**

(84) Designated Contracting States: **AT BE CH DE FR GB IT LI
LU NL SE**

(71) Applicant: **MAYHEW FOOD PRODUCTS LIMITED,
Uckfield East Sussex TN22 4BS (GB)**

(72) Inventor: **Parsons, Bruce J., Pinemarten, Rannoch Road
Crowborough Sussex (GB)**

(74) Representative: **Brown, Kenneth Richard et al, R.G.C.
Jenkins & Co. 12-15, Fetter Lane, London EC4A 1PL
(GB)**

(54) **Food processing method.**

㊸ A method of processing a paste-like food material, par-
ticularly one comprising raw MRM, in which the material is
broken into pieces which are cooked in such a way that they
do not break down further into minute particles. The result is
a granular processed food product which can be used as a
complete substitute for minced meat.

The MRM is preferably added in bulk to boiling water
and the mixture agitated, e.g. by mechanical stirring, various
parameters of the process being carefully controlled to
produce the required cooked piece size.

## FOOD PROCESSING METHOD

This invention relates to a method of processing a paste-like food material. The invention is particularly, but not exclusively, applicable to the processing of mechanically recovered meat paste.

It is known practice in the meat processing industry, to recover residual meat from the bones of carcasses after removal of the prime cuts of meat. This residual meat is nutritionally beneficial, and its recovery and use in meat products is also economically useful. There are in existence certain known machines, such as the Protecon machine made by Stork B.V., which can remove this residual meat mechanically from the bones. Because of the nature of the process employed in these machines, the end product is a very fine meat paste, the residual meat portions having been finely divided into meat particles by the stripping action of the meat recovery mechanism.

It is known to use this fine meat paste for "bulking" various meat products, for example beefburgers and other products using prime minced beef. In the known techniques, the meat paste is generally mixed with the prime minced meat in order to produce a minced meat/paste mixture from which the beefburgers, steaks etc., are made.

In this technique, the proportion of mechanically recovered meat (MRM) to prime meat which can be used is limited, since the use of a high proportion of MRM paste creates a texture which is unsufficiently firm to be acceptable to the consumer.

The present invention aims to provide a technique for processing such MRM or other material to create a product which instead of being used for bulking a meat product, can be used in place of the prime meat product itself.

To that end, the method of the invention is characterised in that pieces of the paste-like food material are cooked or partially cooked so as to produce a granular processed food product.

The cooking medium is preferably water, a quantity of which is first boiled in a suitable vessel, a calculated quantity of the paste-like material being added to the vessel, and the temperature of the water being maintained at or near boiling until the cooking process is complete.

The material may be added to the water either in its fresh paste form or after being frozen. Where frozen MRM is used, it is broken up into small pieces before addition to the cooking vessel. In either case, the water is agitated as the MRM is added and cooked, and this agitation serves to break up the MRM into mince size particles which become individually set and cooked to produce the required granular consistency.

To break up the frozen MRM before addition to the cooking vessel, a mincing, or flaking process may be employed.

Preferably, the relative quantities of boiling water in the vessel and of the added MRM, and the level of heating of the vessel are determined so that during the cooking process, the temperature of the water does not drop below a predetermined temperature (which may be about 80°C) during the cooking process, this temperature being such that the external surfaces of the MRM pieces "set" so that these pieces become relatively firm and will remain separate after cooking rather than coaleseing.

Whether fresh or frozen MRM is used, the agitation must be carefully controlled in order to avoid causing the paste to become diluted by the boiling water into a thin meat slush.

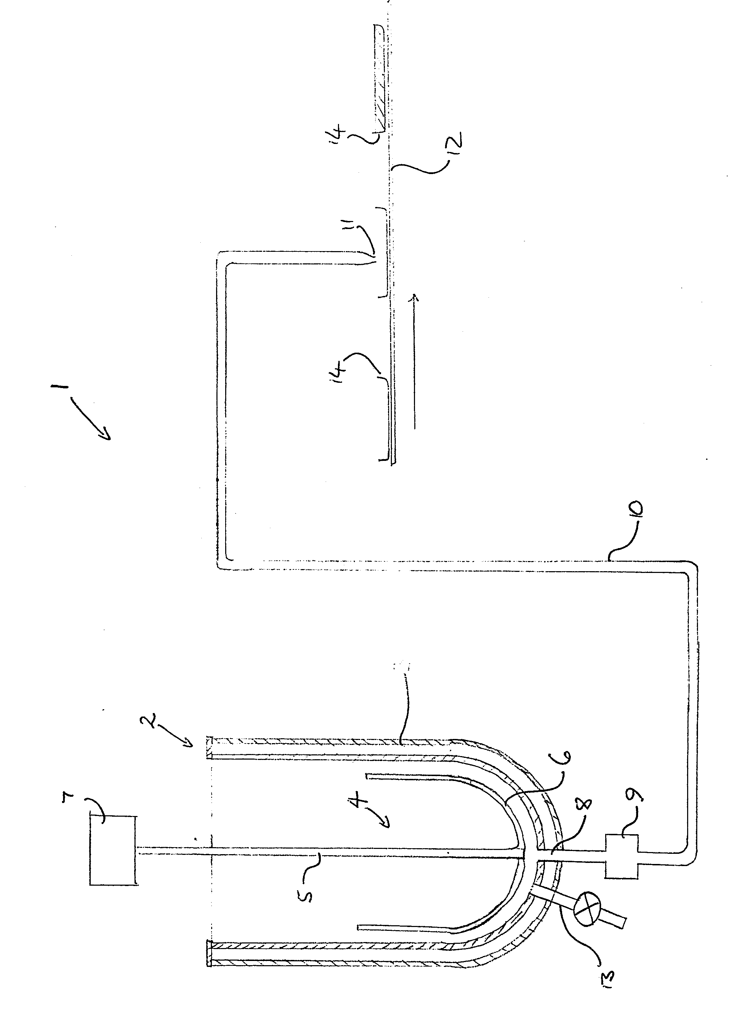

Reference will now be made to the accompanying drawings the single figure of which illustrates schematically a small-scale production arrangement for performing a process in accordance with the present invention.

In the known Protecon meat recovery machine a hopper leads into a horizontally disposed cylinder in which a compression piston is slidably disposed. The machine operates cyclically, and in each cycle a quantity of carcasses or separated bones is introduced from the hopper (into which they are loaded manually) into the cylinder, and there is compressed by the piston against a perforate or apertured end disc. The compression is so great that the residual raw meat on the carcasses or bones becomes fluid and passes out of the cylinder through the disc, whence it passes out of the machine through an outlet nozzle as a fine raw meat paste. This product is known as MRM. The recovery process applied, can be for example, to whole chicken carcasses, or to separated bones and joints of larger animals.

Other machines which will be known to those skilled in the art for producing MRM are the Payoli, Baader and Beehive machines.

In the arrangement 1 illustrated in the figure, an open-topped vat 2 includes a steam jacket 3 to permit the vat contents to be quickly and efficiently heated. A stirrer 4 comprises a vertically extending stirrer rod 5 carrying at its lower end a plurality of circumferentially spaced paddles 6. A stirrer motor 7 is mounted above the vat. An outlet 8 is provided in the base of the vat, and a pump 9 is coupled to the outlet 8 to pump the vat contents along a delivery line 10 to a nozzle 11 positioned above a conveyor 12. A filtered drain outlet 13 is also provided in the base of the vat.

To perform a method according to the invention, a measured quantity of water is introduced into the vat and is heated to boiling point by passing steam through the steam jacket 3. A measured quantity of MRM is then emptied in bulk (e.g. 1 Kg lumps) into the vat while heating is continued, and the stirrer motor 7 is actuated. The agitation, or turbulence created by the paddles 6 aided if necessary, by manually operated paddles, is controlled to cause sufficient break up of the MRM to produce the required mince-sized pieces. During this break up, the outer surfaces of the pieces become sufficiently cooked so as to "set", and thereby prevent excessive break up into minute particles, which cause dilution of the mixture into a thin slush. Once the pieces have set, they cook individually in the water, and after a controlled cooking period both the stirring and the heating are discontinued. After the appropriate cooking period, fat may be skimmed from the surface of the water in the vat; since the fat content in the MRM will vary from batch to batch, and is also different for different animals, this skimming will not always be necessary. Other suitable ingredients may then be added, e.g. anti-oxidant. Finally, the water is drained from the vat 2 through the drain 13 and the remaining cooked, granular meat material may be removed, and then used as required, e.g. with gravies, sauces, etc. In the illustrated embodiment, however, the mixing can be carried out in the vat itself. The necessary further ingredients can simply be tipped into the vat, and mixed with the meat material using the stirrer. The meat sauce can then be pumped by the pump 9 along the line 10 to the nozzle 11, from which it flows into suitable containers 14 successively moved to and stopped at the filling position beneath the nozzle 11.

As mentioned earlier, the MRM may be introduced into the vat in a frozen, flaked state.

A number of parameters of the above described process can be varied in order to achieve the required particle size in the final product. The optimum values for these parameters will depend upon such factors as consistency of the initial MRM paste, the amount of MRM to be processed in one operation, etc. The main parameters which can be controlled are:-

1. Ratio of MRM to water.

2. Degree of agitation during the cooking process.

3.    Piece size when the MRM is added in its frozen state.

4.    Cooking time.

5.    Temperature of the water.

As mentioned above, it is important to minimize the temperature reduction from boiling on addition of the MRM and during the cooking process, and to set the agitation at a level which will cause break-up of the MRM paste, and/or sufficient mixing of the MRM pieces in the boiling water without complete break-up of these pieces into the tiny particles which made up the original MRM.

Although satisfactory results have mostly been obtained using high water/meat weight ratios which prevent temperature reduction below a high cooking temperature, such as 80°C, it is also possible to use very low ratios. Although with such low ratios the temperature quickly falls below this temperature on addition of the MRM to the boiling water, the temperature can rise again very rapidly because of the low thermal inertia due to the small quantity of water.

In a particular arrangement employed in accordance with the invention, apparatus as shown in the figure was used, the cooking vessel being a 300 litre vat, 138 Kg of water was boiled and 156.5 Kg of MRM was added. Heating was continued for a period of about 4 minutes. The above-described skimming, draining and ingredient mixing operations were then carried out.

It will be understood that the product of the above process is a granular meat material which can be used in place of beef, or other meat (chicken, pork etc.) as distinct from being used as a material for bulking a meat product consisting mainly of prime minced meat. The particles in the produced meat material preferably have a maximum diameter, whatever their shape, of no more than 7 mm, and preferably no more than 5 mm.

It will be understood that variations of the above described process may be possible without departing from the essential concept of the invention as defined earlier. For example, numerous other means of agitating the MRM and water mixture may be employed.

The use of a liquid cooking medium is not essential to the invention. For example, the raw MRM paste could be supplied to a suitable mincing machine operated so as to break it up into mince-sized pieces which then fall onto a hot surface, e.g. onto a heated conveyor. The pieces remain separate and are individually cooked to produce the required granular meat product.

It should be noted that although the processes described above use 100% raw MRM as the starting material, the MRM could initially be mixed with other ingredients before the cooking step. All that is necessary is that the meat paste to which the cooking step is applied should have a sufficiently high raw meat content for the "setting" action, which relies upon the protein in the meat, to take place.

0196235

- 10 -

CLAIMS:-

1.    A method of processing a paste-like food material, characterised in that pieces of the material are cooked or partially cooked so as to produce a granular processed food product.

2.    A method according to claim 1, characterised in that said pieces of material are cooked in a hot liquid.

3.    A method according to claim 2 characterised by the steps of heating the liquid, introducing the food material in bulk into the liquid, further heating the liquid to maintain or restore cooking temperature, and creating sufficient agitation or turbulence in the mixture of material and liquid to break the material into said pieces.

4.    A method according to claim 3 wherein when the food material is introduced, the temperature of the liquid is thereafter prevented from falling below 80°C for a predetermined cooking period.

5.    A method according to any preceding claim wherein said paste-like food material comprises raw MRM.

0196235